**Europäisches Patentamt**

**European Patent Office**

**Office européen des brevets**

(19)

(11) Veröffentlichungsnummer: **0 250 043**
**B1**

(12) # EUROPÄISCHE PATENTSCHRIFT

(45) Veröffentlichungstag der Patentschrift:
**31.10.90**

(51) Int. Cl.⁵: **C25B 9/00**
**// C25B1/04**

(21) Anmeldenummer: **87201125.9**

(22) Anmeldetag: **13.06.87**

(54) Vorrichtung zur Hochtemperatur-Elektrolyse von Wasserdampf.

(30) Priorität: **18.06.86 DE 3620313**

(43) Veröffentlichungstag der Anmeldung:
**23.12.87 Patentblatt 87/52**

(45) Bekanntmachung des Hinweises auf die Patenterteilung:
**31.10.90 Patentblatt 90/44**

(84) Benannte Vertragsstaaten:
**BE DE ES FR GB IT**

(56) Entgegenhaltungen:
EP-A- 0 158 760
DE-A- 3 101 210
DE-A- 3 325 285

CHEMICAL ABSTRACTS, Band 104, Nr. 16, 21.
April 1986, Columbus, Ohio, USA GUTH, ULRICH;
MOEBIUS, HANS HEINRICH "Hydrogen production by
high temperature electrolysis of water vapor in solid
electrolyte cells " Seite 145, Spalte 1,
Zusammenfassung-Nr. 132 353t & Wiss. Z.
Ernst-Moritz-Arndt-Univ. greifsw., Math.-Naturwiss.
Reihe 1985, 34(1-2), 4-8 000
CHEMICAL ABSTRACTS, Band 101, Nr. 24, 10.
Dezember 1984, Columbus, Ohio, USA DOENITZ,
WOLFGANG; ERDLE, ERICH; HERMEKING, HAJO;
KOCH, ALFRED; KOCK, WULF; ROETTENBACHER,

(73) Patentinhaber: **METALLGESELLSCHAFT AG,**
**Reuterweg 14 Postfach 3724, D-6000 Frankfurt/M.1(DE)**

(72) Erfinder: **Höcke, Manfred, Dipl.-Ing., Rapunzelweg 1,**
**D-6234 Hattersheim 3(DE)**
Erfinder: **Streicher, Rolf, Dr.-Ing., Im Hainpfad 16,**
**D-6232 Bad Soden(DE)**
Erfinder: **Quandt, Karl Hein, Dipl.-Ing., z. Zt.**
**Apt. 302 Domiru Saito Annex 3 Daikyd, Shinjuku-Ku**
**Tokyo 160(JP)**

(74) Vertreter: **Rieger, Harald, Dr., Reuterweg 14,**
**D-6000 Frankfurt a.M.(DE)**

(56) Entgegenhaltungen: (Fortsetzung)
CHEMICAL ABSTRACTS, Band 102, Nr. 6, 11.
Februar 1985, Columbus, Ohio, USA VIGUIE, J.C.
"Fabrication and characterization of a set of
electrolytic cells for the electrochemical reduction of
water vapor at 850 C" Seite 468, Spalte ",
Zusammenfassung-Nr. 53 042w & Report 1983,
EUR-8480-FR; Order No. PB84-213586, 51pp. (Fr). Avail.
NTIS. From Gov. Rep. Announce. Index
(U.S.) 1984, 84(20), 258
REINHARD; SCHAEFER, WOLFGANG; SCHAMM,
REINHOLD; SCHMIDBERGER, RAINER "High
temperature electrolysis of water vapor: Hot Elly,
phase 2A" Seite 461, Spalte 1,

(56) Entgegenhaltungen: (Fortsetzung)

Zusammenfassung-Nr. 218 545g & Report 1984, BMFT-FB-T-84-032, 252pp. (Eng). Avail. NTIS. From Sci Tech. Aerosp. Rep. 1984, 22(16), Abstr. No. N84-25784 CHEMICAL ABSTRACTS, Band 101, Nr. 24, 10. Dezember 1984, Columbus, Ohio, USA DIETRICH, G.; SCHAEFER, W. "Advances in the development of thin-film cells for high temperature electrolysis" Seite 461, Spalte 1, Zusammenfassung-Nr. 218 547j & Int. J. Hydrogen Energy 1984, 9(9), 742-52r: Hot Elly, phase 2A" Seite 461, Spalte 1,

Zusammenfassung-Nr. 218 545g & Report 1984, BMFT-FB-T-84-032, 252pp. (Eng). Avail. NTIS. From Sci Tech. Aerosp. Rep. 1984, 22(16), Abstr. No. N84-25784 CHEMICAL ABSTRACTS, Band 100, Nr. 24, 11. Juni 1984,Columbus, Ohio, USA DIETRICH, G.; SCHAEFER, W.; DOENITZ, W. "Development of thin film cells for high temperature electrolysis" Seite 501, Spalte 1, Zusammenfassung-Nr. 199 810a & Comm. Eur. Communities, (Rep.) EUR 1983, EUR 8651, Hydrogen Energy Carrier, 237-43, Spalte 1,

Zusammenfassung-Nr. 218 545g & Report 1984, BMFT-FB-T-84-032, 252pp. (Eng). Avail. NTIS. From Sci Tech. Aerosp. Rep. 1984, 22(16), Abstr. No. N84-25784 CHEMICAL ABSTRACTS, Band 95, Nr. 8, 24. August 1981, Columbus, Ohio, USA ACCORSI, ROLAND "Hydrogen production by high-temperature electrolysis of water vapor in stabilized-zirconia solid electrolyte cells" Seite 533, Spalte 1,

Zusammenfassung-Nr. 69 850f & Comm. Eur. Communities, (Rep.) EUR 1980, EUR 6964, 39pp., Spalte 1, Zusammenfassung-Nr. 218 545g & Report 1984, BMFT-FB-T-84-032, 252pp. (Eng). Avail. NTIS. From Sci Tech. Aerosp. Rep. 1984, 22(16), Abstr. No. N84-25784

CHEMICAL ABSTRACTS, Band 95, Nr. 8, 24. August 1981, Columbus, Ohio, USA VIGUIE, J.C.; BERNARD, H. "Electrolysis of water vapor at 850 C. Characteristics of a 50-cm 2 flat cell" Seite 533, Spalte 2, Zusammenfassung-Nr. 69 853j & Comm. Eur. Communities, (Rep.) EUR 1980, eur 6783, Hydrogen Energy Vector, 349-61pp., Spalte 1, Zusammenfassung-Nr. 218 545g & Report 1984, BMFT-FB-T-84-032, 252pp. (Eng). Avail. NTIS. From Sci Tech. Aerosp. Rep. 1984, 22(16), Abstr. No. N84-25784 CHEMICAL ABSTRACTS, Band 95, Nr. 8, 24. August 1981, Columbus, Ohio, USA ACCORSI, R. "Electrolysis of water vapor at high temperature in a cell with stabilized zirconia solid electrolyte" Seite 533, Spalte 2, Zusammenfassung-Nr. 69 853j & Comm. Eur. Communities, (Rep.) EUR 1980, Eur 6783, Hydrogen Energy Vector, 362-77e 1,

Zusammenfassung-Nr. 218 545g & Report 1984, BMFT-FB-T-84-032, 252pp. (Eng). Avail. NTIS. From Sci Tech. Aerosp. Rep. 1984, 22(16), Abstr. No. N84-25784 CHEMICAL ABSTRACTS, Band 99, Nr. 12, 19. September 1983, Columbus, Ohio, USA VIGUIE, J.C. "Construction and characterization of an electrolyzer for electrochemical reduction of steam at 850 C" Seite 490, Spalte 2, Zusammenfassung-Nr. 95 780k & Comm. Eur. Communities, (Rep.) EUR 1983, EUR 8480, 43 pp.ergy Vector, 362-77e 1,

Zusammenfassung-Nr. 218 545g & Report 1984, BMFT-FB-T-84-032, 252pp. (Eng). Avail. NTIS. From Sci Tech. Aerosp. Rep. 1984, 22(16), Abstr. No. N84-25784

## Beschreibung

Die Erfindung betrifft eine Vorrichtung zur Elektrolyse von Wasserdampf mit einer Temperatur von mindestens 600°C durch Diffusion von Sauerstoff durch Diffusionsschichten aus Zirkondioxid, wobei jede Diffusionsschicht mit einer metallisch porös beschichteten Kathoden- und Anodenseite versehen ist.

Aus der deutschen Patentschrift 3 101 210 ist eine solche Vorrichtung bekannt, wobei die Diffusion des Sauerstoffs durch röhrenförmige Diffusionsschichten erfolgt. Bei der bekannten Vorrichtung werden zahlreiche Diffusionsrohre parallel geschaltet, um eine leistungsfähige Einheit zum Erzeugen von Wasserstoff durch Elektrolyse von Wasserdampf zu erreichen.

Der Erfindung liegt die Aufgabe zugrunde, die Elektrolysevorrichtung aus flachen, plattenförmigen Elementen aufzubauen. Das vereinfacht und verbilligt ihre Herstellung und ermöglicht ein raumsparendes Zusammenschalten einer großen Anzahl von Elektrolysezellen zu einer leistungsfähigen Einheit. Erfindungsgemäß wird dies bei der eingangs genannten Vorrichtung dadurch erreicht, daß abwechselnd metallisch leitende Trennplatten und Elektrodenplatten übereinander angeordnet sind, wobei zwischen den Trennplatten und Elektrodenplatten durchströmbare Räume bestehen, daß jede Trennplatte zahlreiche Öffnungen aufweist in denen plattenförmige Zirkondioxid-Diffusionselemente, welche eine Ober- und eine Unterseite aufweisen, gasdicht eingesetzt sind, die Ober- und Unterseite eines jeden Diffusionselements metallisch porös beschichtet ist, auf den Diffusionselementen eine Elektrodenplatte liegt und daß oberhalb und unterhalb jeder Elektrodenplatte im Bereich der Diffusionselemente Gasströmungskanäle zum Zu- und Ableiten von Wasserdampf oder zum Ableiten von Sauerstoff vorhanden sind.

Durch die Gasströmungskanäle kann der Wasserdampf zur Kathodenseite des $ZrO_2$-Diffusionselements gelangen und der Sauerstoff durch das Element unter der Wirkung der anliegenden elektrischen Gleichspannung von etwa 1,3 Volt hindurch diffundieren. Von der Anodenseite des Elements strömt der Sauerstoff getrennt von einem Gemisch aus Wasserdampf und Wasserstoff zu einem Sammelkanal oder in die Atmosphäre. Über einen anderen Sammelkanal wird das Gemisch aus $H_2O$ und $H_2$ abgezogen und der wertvolle Wasserstoff durch Kondensation des Wassers gewonnen.

Vorteilhafterweise ist zwischen der Kathodenseite des $ZrO_2$-Diffusionselements und der Elektrodenplatte ein Verweilraum für Wasserdampf ausgebildet. Herstellungstechnisch bereitet dies keine Schwierigkeiten, da man dies durch die Formgebung des Elements leicht erreichen kann.

Einzelheiten der Vorrichtung werden mit Hilfe der Zeichnung erläutert. Es zeigt:

Fig.l eine Elektrolysezelle im Querschnitt in stark vergrößerter, teilweise auseinandergezogener Darstellung,

Fig.2 im Schnitt nach der Linie II-II in Fig.l die Anordnung zahlreicher Diffusionselemente in der Trennplatte,

Fig.3 im Schnitt nach der Linie III-III in Fig.l die Sicht gegen die Kathodenseite eines in der Trennplatte sitzenden Diffusionselements und

Fig.4 in stark schematisierter Darstellung ein Elektrolysezellen-Paket.

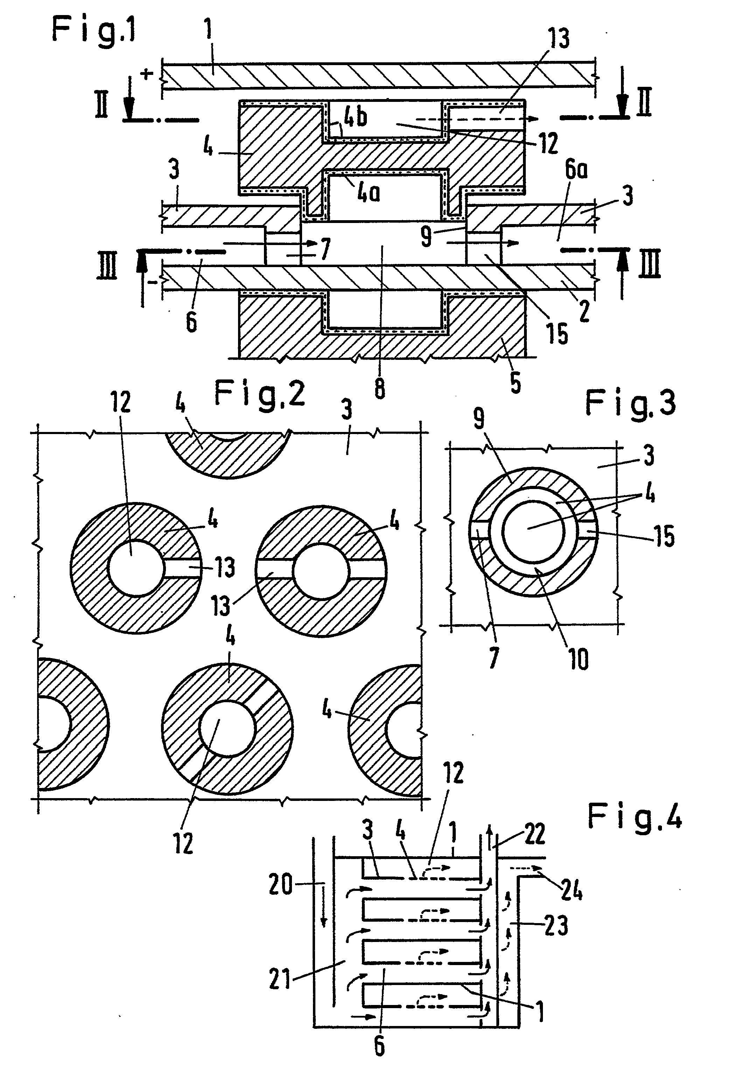

In Fig.l sind Elektrodenplatten (I) und (2), eine Trennplatte (3), ein $ZrO_2$-Diffusionselement (4) und ein weiteres, nur teilweise dargestelltes Diffusionselement (5) wiedergegeben. Fig.l ist gegenüber den Fig.2 und 3 vergrößert. Der besseren Übersichtlichkeit wegen ist in Fig.l das Diffusionselement (4) sowohl von der Elektrodenplatte (I) als auch von der Trennplatte (3) abgehoben dargestellt. In der Realität sitzen die Platte (I), das Element (4) und die Trennplatte (3) fest aufeinander, wobei der Übergang zwischen dem Element und der Trennplatte (3) gasdicht ausgebildet ist. Dies geschieht z.B. durch Glätten (Schleifen, Polieren) der sich berührenden Flächen.

Die Kathodenseite (4a) sowie die Anodenseite (4b) des Diffusionselements (4) sind metallisch porös beschichtet, damit die beiden Seiten elektrisch leitend und gleichzeitig auch gasdurchlässig sind. Zu jeder Trennplatte gehören zahlreiche Diffusionselemente (4). Im Beispiel der Zeichnung sind die Elemente (4,5) runde Scheiben mit im Querschnitt H-Form, wobei der Mittelbereich dünner ist als der Randbereich.

Der elektrolytisch zu zerlegende Wasserdampf, der Temperaturen im Bereich von 600 bis 1200°C und vorzugsweise 800 bis 110°C aufweist, kommt aus dem Zwischenraum (6) zwischen der Trennplatte (3) und der Elektrodenplatte (2) und tritt durch einen Kanal (7) in einen Verweilraum (8) ein. Der Kanal (7) ist eine Aussparung in einem Stützring (9), vgl. auch Fig.3, der die Ausnehmung (l0) umgibt, in welcher das Diffusionselement (4) sitzt. Unter der Wirkung der elektrischen Spannung tritt Sauerstoff, der dem $H_2O$-Molekül entzogen wird, durch das Element (4) hindurch und sammelt sich zunächst im Sammelraum (l2), vgl. auch Fig.2. Von hier strömt der Sauerstoff durch mindestens einen Kanal (l3) in den freien Raum zwischen der Elektrodenplatte (I) und der Trennplatte (3), von wo er über eine Sammelleitung abgezogen wird. Da die Elemente (4) gasdicht in der Ausnehmung (l0) sitzen, kann der abgetrennte Sauerstoff mit dem $H_2O$-$H_2$-Gemisch nicht mehr in Kontakt treten. Das $H_2O$-$H_2$-Gemisch gelangt vom Verweilraum (8) durch einen Kanal (l5), vgl. auch Fig.3, in den Zwischenraum (6a) und kann von da weiteren Elementen (4) zuströmen, die in der Trennplatte (3) sitzen. Schließlich wird das $H_2$-reiche Gemisch über eine Sammelleitung abgeführt.

In Fig.2 ist zu sehen, wie zahlreiche Diffusionselemente (4) inselartig in der Trennplatte (3) sitzen. Das Zirkondioxid der Elemente ist ein elektrischer Isolator, so daß zwischen der Kathoden- und der Anodenseite eine elektrische Gleichspannung, die etwa 1,3 Volt beträgt, aufrechterhalten werden kann. Die übrigen Teile der Zelle, nämlich die Elektrodenplatten (l,2) und die Trennplatte (3) bestehen aus einer hochwarmfesten metallischen Legierung, z.B. einer Nickel-Legierung, und sind elektrisch leitend. Die Dicke der Elektrodenplatten und der Trennplatten liegt etwa bei 0,5 bis 2 mm, die Höhe eines Diffusionselements (4) beträgt etwa 0,5 bis 2 mm, wobei der dünne Mittelbereich eine Dicke von etwa 0,2 bis 0,4 mm aufweist. Der Durchmesser des Elements (4) kann etwa im Bereich von 20 bis 400 mm liegen, wobei die Herstellbarkeit und die mechanische Belastbarkeit zu beachten sind. Die Höhe des Zwischenraumes (6), durch den das $H_2O$-$H_2$-Gemisch von Element zu Element strömt, beträgt etwa 0,5 bis 2 mm. In der Zeichnung sind die Diffusionselemente (4) rund ausgebildet, was für ihre Herstellung vorteilhaft ist. Man kann jedoch abweichend davon auch eine eckige Form wählen.

Durch die flache Ausbildung der verschiedenen Teile der Elektrolysezellen kann ein raumsparendes Zellenpaket erzeugt werden, das schematisch in Fig.4 dargestellt ist. Isolierungen sind zur Vereinfachung in Fig.4 weggelassen. Das Zellenpaket der Fig.4 besteht aus den Elektrodenplatten (I), den Trennplatten (3) mit darin eingelassenen Diffusionselementen (4), der Wasserdampf-Zufuhrleitung (20), die den Wasserdampf einer Verteilerkammer (2I) zuführt, von wo er in die Zwischenräume (6) gelangt. Ein $H_2$-$H_2O$-Gemisch verläßt die Anordnung durch die Sammelleitung (22) und der Sauerstoff gelangt von den jeweiligen Sammelräumen (I2) ausgehend zu einer Abzugskammer (23) und in die Abzugsleitung (24). Es ist ohne weiteres möglich, in einem Zellenpaket z.B. 600 Elektrodenplatten übereinander zusammenzuschalten, wobei jede Platte eine Fläche von z.B. 0,8 $m^2$ einnehmen kann. Durch diese raumsparende Parallelschaltung einer großen Anzahl von Elektrolysezellen ist es möglich, Wasserstoff in beliebiger Menge zu erzeugen.

## Patentansprüche

1. Vorrichtung zur Elektrolyse von Wasserdampf mit einer Temperatur von mindestens 600°C durch Diffusion von Sauerstoff durch Diffusionsschichten aus Zirkondioxid, wobei jede Diffusionsschicht mit einer metallisch porös beschichteten Kathoden- und Anodenseite versehen ist, dadurch gekennzeichnet, daß abwechselnd metallisch leitende Trennplatten und Elektrodenplatten übereinander angeordnet sind, wobei zwischen den Trennplatten und Elektrodenplatten durchströmbare Räume bestehen, daß jede Trennplatte zahlreiche Öffnungen aufweist, in denen plattenförmige Zirkondioxid-Diffusionselemente, welche eine Ober- und eine Unterseite aufweisen, gasdicht eingesetzt sind, die Ober- und Unterseite eines jeden Diffusionselements metallisch porös beschichtet ist, auf den Diffusionselementen eine Elektrodenplatte liegt und daß oberhalb und unterhalb jeder Elektrodenplatte im Bereich der Diffusionselemente Gasströmungskanäle zum Zu- und Ableiten von Wasserdampf oder zum Ableiten von Sauerstoff vorhanden sind.

2. Vorrichtung nach Anspruch 1, dadurch gekennzeichnet, daß zwischen der Anodenseite jedes Diffusionselements und der Elektrodenplatte ein Sauerstoff-Sammelraum ausgebildet ist.

3. Vorrichtung nach Anspruch 1 oder 2, dadurch gekennzeichnet, daß zwischen der Kathodenseite jedes Diffusionselements und der Elektrodenplatte ein Verweilraum für Wasserdampf ausgebildet ist.

4. Vorrichtung nach Anspruch 1 oder einem der folgenden, dadurch gekennzeichnet, daß Trennplatten mit Diffusionselementen und Elektrodenplatten mehrfach übereinander als Paket angeordnet sind.

5. Vorrichtung nach Anspruch 4, dadurch gekennzeichnet, daß benachbarte Elektrodenplatten des Pakets einen Abstand von etwa 2 bis 20 mm aufweisen.

## Revendications

1. Installation d'électrolyse de la vapeur d'eau à une température d'au moins 600°C, par diffusion d'oxygène à travers des couches de diffusion en dioxyde de zirconium, chaque couche de diffusion étant munie d'un côté cathodique et d'un côté anodique à revêtement métallique poreux, caractérisé en ce que des plaques métalliques de séparation conductrices de l'électricité et des plaques formant électrode sont superposées alternativement, des espaces de passage étant ménagés entre les plaques de séparation et les plaques formant électrode, en ce que chaque plaque de séparation comporte un grand nombre d'ouvertures dans lesquelles sont introduits, de manière étanche au gaz, des éléments de diffusion en dioxyde de zirconium sous forme de plaque, qui comportent un côté supérieur et un côté inférieur, les côtés supérieur et inférieur de chaque élément de diffusion étant revêtus d'un revêtement métallique poreux et une plaque formant électrode s'appliquant sur l'élément de diffusion et en ce que, au-dessus et en-dessous de chaque plaque formant électrode, il est prévu, dans la région des éléments de diffusion, des canaux d'écoulement du gaz pour amener et évacuer de la vapeur d'eau ou pour évacuer de l'oxygène.

2. Installation suivant la revendication 1, caractérisée en ce qu'entre le côté anodique de chaque élément de diffusion et la plaque formant électrode est formée une chambre collectrice de l'oxygène.

3. Installation suivant la revendication 1 ou 2, caractérisée en ce qu'entre le côté cathodique de chaque élément de diffusion et la plaque formant électrode est formée une chambre de séjour de la vapeur d'eau.

4. Installation suivant la revendication 1 ou une des suivantes, caractérisée en ce que des plaques de séparation, avec des éléments de diffusion et des plaques formant électrode, sont superposées plusieurs fois sous la forme d'un paquet.

5. Installation suivant la revendication 4, caractérisée en ce que des plaques voisines formant électrode du paquet sont à une distance de 2 à 20 mm environ.

## Claims

1. Apparatus for the electrolysis of water vapour having a temperature of at least 600°C by diffusion of oxygen through diffusion layers of zirconium dioxide, each diffusion layer being provided with a porous metallic coated cathode side and anode side, characterised in that metallic conductive separating plates and electrode plates are arranged alternately one above the other, with spaces through which gas can flow existing between the separating plates and electrode plates, that each separating plate has numerous openings in which plate-shaped zirconium dioxide diffusion elements which have an upper side and a lower side are inserted in gas-tight manner, the upper and lower side of each diffusion element has a metallic porous coating, an electrode plate lies on the diffusion elements and that gas flow channels for supplying and removing water vapour or for removing oxygen are present above and below each electrode plate in the region of the diffusion elements.

2. Apparatus according to Claim 1, characterised in that an oxygen-collecting space is formed between the anode side of each diffusion element and the electrode plate.

3. Apparatus according to Claim 1 or 2, characterised in that a dwell space for water vapour is formed between the cathode side of each diffusion element and the electrode plate.

4. Apparatus according to Claim 1 or one of the following Claims, characterised in that a plurality of separating plates with diffusion elements and electrode plates is arranged one above the other as a set.

5. Apparatus according to Claim 4, characterised in that adjacent electrode plates of the set are at an interval of about 2 to 20 mm.

Fig.1

Fig.2

Fig.3

Fig.4